# EUROPÄISCHE PATENTANMELDUNG

(11) **EP 1 090 697 A2**
(43) Veröffentlichungstag der Anmeldung: **11.04.2001**
(21) Anmeldenummer: 00122343.7
(22) Anmeldetag: 03.09.1996
(51) Int. Cl.: B21C 37/04

(54) **Bauteil, insbesondere tragendes Teil für Fachwerke**

(30) Priorität: 04.09.1995 DE 29514164 U
(62) Teilanmeldung aus: 96937180.6
(71) Anmelder: Ebbinghaus, Alfred, 73431 Aalen (DE)
(72) Erfinder: Ebbinghaus, Alfred, 73431 Aalen (DE)
(74) Vertreter: Neidl-Stippler, Cornelia, Dr.

(57) **Zusammenfassung**

Die Erfindung betrifft ein Bauteil, insbesondere tragendes Teil für Fachwerke mit ggf. in Form und/oder Größe unterschiedlichen Längs- und/oder Querschnitten mit einem hohlen Außenformteil (12) und einer Schaumfüllung (14) mit hohem Widerstand gegen Verformung, der am Außenformteil zumindest teilweise anliegt, den Innenhohlraum des hohlen Außenformteils (12) mindestens teilweise ausfüllt und das Verhalten des Außenformteils (12) verbessert.

## Beschreibung

Die Erfindung betrifft ein Bauteil, insbesondere tragendes Teil für Fachwerke.

Sie betrifft insbesondere mindestens teilweise hohle Formteile mit ggf. in Form und/oder Größe unterschiedlichen Längs- und/oder Querschnitten mit einer hohlen Außenform und einer Füllung mit einem offen- oder geschlossenzelligen Schaumstoff.

Trägerelemente aus Hohlmaterial, wie Rohre, Stangen, Hohlträger (bspw. mittels des Innenhochdruckumformverfahrens hergestellte Trägerteile für Fahrräder, Autohinterachsen, Abgasrohre etc.) sind für die verschiedensten Anwendungsgebiete bekannt - so für Bauwerke, insbesondere Brücken oder auch Häuser - als stützende und tragende Elemente oder auch für den Bau von Luft - Land- und Wasserfahrzeugen, Regalsysteme, Möbel, u. dgl.

Sie haben unter anderem den Vorteil, eine leichte aber dennoch gegenüber Belastungen widerstandsfähige Bauweise zu ermöglichen.

Bspw. werden bei Kraftfahrzeugen neuerdings zur Gewichtsersparnis wieder Fachwerkrahmen eingesetzt, um eine besonders leichte, widerstandsfähige und torsionssteife Bauweise zu ermöglichen. Auch bei Flugzeugen, bei denen Gewichtsersparnis ein wesentlicher Gesichtspunkt bei der Konstruktion ist, wurde häufig eine Fachwerkbauweise mit hohlen oder massiven Fachwerktragteilen eingesetzt.

Die bekannten Tragkonstruktionen und -teile sind insofern noch verbesserungsfähig, als es immer erwünscht ist, diese noch widerstandsfähiger - insbesondere mit besserer Knickfestigkeit - herzustellen.

Ferner war es nachteilig, daß für tragende Hohlteile immer noch hohe Wandstärken und große Dimensionen verwendet mußten, die zu unerwünscht hohen Gewichten und Abmessungen dieses Teils führten - insbesondere, wenn eine erhöhte Knickfestigkeit bzw. Belastbarkeit erwünscht war. Bei hohen Wanddicken traten auch Probleme bei der Herstellung komplizierter Formen auf, da dann einfache Umformverfahren, die nur für Material geringer Stärke eingesetzt werden konnten, nicht mehr eingesetzt werden konnten.

Es ist bereits bekannt, Hohlteile auszuschäumen, um bspw. deren Schwingungseigenschaften zu verändern. So werden Kardanwellen ausgeschäumt, um ihre Laufeigenschaften und Schwingungseigenschaften zu verbessern. Bei diesem Ausschäumen von Hohlteilen trägt der Polymerschaum, der dort keinen hohen Deformationswiderstand aufweist, zu den Deformationseigenschaften der Welle nichts bei und wirkt lediglich als schwingungsverändernder Zusatz.

Es ist Aufgabe der Erfindung, leichte Bauteile, die sich insbesondere als tragende Teile eignen, herzustellen, die gegenüber bekannten Teilen bei gleichen oder besseren Belastungseigenschaften leichter und ggf. kleiner sind.

Die Aufgabe wird erfindungsgemäß durch ein Bauteil, insbesondere tragendes Teil für Fachwerke mit ggf. in Form und/oder Größe unterschiedlichen Längs- und/oder Querschnitten mit einem hohlen Außenformteil (12) und einer Metallschaum-Füllung mit einem Metall-Schaumstoff (14) mit hohem Widerstand gegen Verformung, der am Außenformteil zumindest teilweise anliegt, den Innenhohlraum des hohlen Außenformteils (12) mindestens teilweise ausfüllt und die Belastungseigenschaften des Außenformteils (12) sowie die Widerstandsfähigkeit gegen Verformung verbessert, gelöst.

Vorteilhafte Weiterbildungen ergeben sich aus den Unteransprüchen.

Als hohles Außenformteil können dabei an sich bekannte hohle Formteile, wie nahtlose oder geschweißte Rohre oder andere bekannte Profile eingesetzt werdenes ist aber auch möglich, derartige Formteile speziell herzustellen und entsprechend den Anforderungen auszulegen. Als Material dafür bieten sich Metalle, aber auch Kunststoffe, einge-schlossen Keramiken und Glas, an. Es ist besonders vor-teilhaft, wenn bspw. Hohlteile mit Spezialformen, die bspw. gegen Knicke besonders widerstandsfähig sind, wie längsgewellte hohle Rohre, gebogene Rohre od. dgl. verstärkt werden.

Dabei ist es aus Festigkeitsgründen vorteilhaft, wenn der Faserverlauf des Materials der Außenform im wesentlichen parallel zu den Außenkonturen des Formteils verläuft, wie dies bspw. durch die Herstellung des Außenformteils mit dem bekannten IHV-Verfahren möglich ist. Dafür sind dann die entsprechenden, kalt umformbaren Materialien dem Fachmann geläufig.

Es kann dabei günstig sein, daß das Außenformteil mehrere parallel zueinander verlaufende, aufeinanderliegende Schichten gleicher oder unterschiedlicher Materialien aufweist, deren Faserverlauf zumindest teilweise parallel zueinander ist.

Insbesondere zur Gewichtsersparnis kann das gesamte Bauteil im wesentlichen aus dem gleichen oder unterschiedlichen Leichtmetallen bestehen. Bspw. kann das Leichtmetall Aluminium oder Magnesium oder eine Legierung derselben sein, womit auch eine günstige Korrosionsfestigkeit verbunden sein kann.

Es ist möglich und in vielen Anwendungsfällen erwünscht, daß das Bauteil faserverstärkte Werkstoffe aufweist, die bei leichtem Gewicht eine hohe mechanische Belastbarkeit aufweisen.

Selbstverständlich können auch Materialien für das Außenformteil eingesetzt werden, die in bekannter Weise warmgeformt wurden, bspw. warmverformte Kunststoffe, wie geblasene oder auch gegossene Kunststoffe, auch faserverstärkte Kunststoffe, die durch den Innenschaum erheblich an Tragfestigkeit gewinnen. Auch natürliche Polymere, wie Cellulose- oder Papierschäume, können erfolgreich eingesetzt werden. Ein besonderer Anwendungsfall ist Glas, das sehr elastisch und leicht ist und als Schaum vorliegen kann.

Das Bauteil kann unterschiedliche Längsschnitte und auch unterschiedliche Querschnitte aufweisen.

Es kann vorteilhaft sein, daß die Einzelkomponenten des ausgeschäumten Formteils aus unterschiedlichen Materialien wie bspw. Metall/Keramik; Metall/Kunststoffschaum; Metallschaum/Kunststoffaußenwand, Metall/Polymerschaum, eingeschlossen natürliche Polymere, wie Papier oder Cellulose oder Kunststoffe etc. sowie Glasschäume bestehen.

Es kann günstig sein, daß mindestens ein hohles Außenteil Vertiefungen oder Erhebungen aufweist.

Die Aufgabe wird auch durch ein Verfahren zur Herstellung eines Formteils gelöst, wobei ein hohles Teil über ein an sich bekanntes Formverfahren hergestellt und sodann in dieses ein Schaumkörper so eingebracht wird, daß der Schaumkörper am hohlen Teil zumindest teilweise anliegt und im hohlen Teil durch Paßsitz oder aber durch ein bekanntes Befestigungsverfahren befestigt wird.

Zur Herstellung von hohlen Formteilen kann eine hohle Außenform in an sich bekannter Weise durch Ziehen, Gießen, Extrudieren, Innenhochdruckumformen hergestellt werden und danach mit dem Schaumausgangsmaterial ausgeschäumt werden. Dabei kann das hohle Außenteil zumindest teilweise aus Metall bestehen, das durch ein Innenhochdruckumformverfahren hergestellt und anschließend mit einem Schaummaterial gefüllt wird.

Es ist aber auch möglich, den Schaum getrennt in einer Form auszuschäumen und dann mittels eines Schrumpfverfahrens oder durch Einziehen des Außenformteils od. dgl. in das Außenformteil einzubringen, wobei darauf zu achten ist, daß bei den zu erwartenden Betriebsbedingungen keine Auftrennung der Materialien erfolgen wird.

Die Herstellung von Polymerschäumen, eingeschlossen natürliche und synthetische Schäume, wie Kunststoffe, Glasschäume und Papier- oder Celluloseschäume - ist üblich und dem Fachmann bekannt - die einfache Herstellung von Metallschäu-men ist neuerdings möglich, wobei bspw. eine Treibmittel/Metallmischung in an sich bekannter Weise in der hohlen Außenform aufgeschäumt wird (s. Studiengesellschaft Stahlanwendung e.V. Forschung für die Praxis; P 286 -Prospektive Marktstudie zur Anwendung von Stahlschäumen von Dipl.-Ing. Markus Weber, Verlag und Vertriebsgesellschaft mbH, Düsseldorf 1995.)

Der Metallschaum kann bspw. ein Stahl- oder Aluminiumschaum oder irgendein anderer Schaum sein, aufgrund der Erfordernisse und des beabsichtigten Einsatzzweckes und seiner dementsprechenden Eigenschaften des Hohlteiles ausgewählt sein.

Bspw. kann es sinnvoll sein, daß die Schaumfüllung eine geschlossenzellige Kunststofffüllung ist, falls damit hauptsächlich eine Vibrationsdämpfung oder Korrosionsverhinderung im Hohlraum bezweckt wird.

Es kann aber auch sinnvoll sein, daß die Schaumfüllung ein Metallschaum ist, falls sie bspw. hohen Temperaturen ausgesetzt werden soll oder das Außenformteil abstützen/sta-bilisieren soll. Das Ausschäumen des Außenformteils verbessert außerdem das elastische Verhalten der Außenwände sowie die thermische und akustische Isolation.

Es kann aber auch ein Glasschaum oder ein Papierschaum sein, bei dem sich dann das Einbringen eines fertigen Schaumkörpers in ein hohles Außenteil und Einkleben/Löten oder auch Befestigen durch Einziehen des Außenteils um den Schaumkörper herum bewerkstelligen läßt.

Der Schaum kann auch offenzellig derart sein, daß z.B. ein Durchleiten von Fluiden zur Kühlung oder Erwärmung des Formteils ermöglicht.

Eine bevorzugte Ausführungsform eines Herstellungsverfahrens für das Bauteil weist folgende Schritte auf:
Vorlegen eines Hohlprofils, ggf. mit unterschiedlichen Durchmessern;
Einlegen eines Hohlprofilabschnitts in eine Form mit einer Erweiterung im Umformbereich;
Anlegen eines Innenhochdrucks an das Rohr, so daß die Rohrwand im Bereich der Formerweiterung erweitert wird;
Herausnehmen des in umgeformten Hohlteils mit Erweiterungen sowie ggf. Einbringen einer Schaumausgangsmischung aus Schaummaterial und Treibmittel in das Hohlteil und Aktivieren des Treibmittels, sodaß der Schaum das Hohlteil ausschäumt.

Es ist aber auch möglich, den Schaum getrennt vom Hohlteil in einer Aufschäumform herzustellen und dann das schwammartige Gebilde im hohlen Außenteil bspw. durch ein Schrumpfverfahren oder Einziehen des Außenteils zu befestigen oder nach thermischem Aufweiten des Hohlteils einzubringen, wobei die Befestigung dann bei der thermischen Schrumpfung des Außenteils erfolgt.

Unter dem erwähnten Innenhochdruckverfahren oder auch IHV-Verfahren wird hier das Verfahren verstanden, das beispielsweise im Industrieanzeiger Nr. 20 vom 9.3.1984 beschrieben worden ist oder auch in "Metallumformtechnik", Ausgabe 1D/91, Seite 15 ff: A. Ebbinghaus: Präzisionswerkstücke in Leichtbauweise, hergestellt durch Innenhochdruckumformen" oder auch Werkstoff und Betrieb 123 (1990), 3, Seite 241 bis 243: A. Ebbinghaus: "Wirtschaftliches Konstruieren mit innenhochdruckumgeformten Präzisionswerkstücken" oder auch "Werkstoff und Betrieb 122, (1991), 11, (1989), Seite 933 bis 938. Nachfolgend wird zur Vermeidung von Wiederholungen auf deren Offenbarung in vollem Umfang Bezug genommen wird, beschrieben ist. Dieses Verfahren wurde bisher für die Herstellung von verschiedenen geformten Hohlteilen, wie bzw. zur Herstellung von gebauten Nockenwellen zur Befestigung von Nocken an einem Rohr, zur Herstellung von hohlen Nockenwellen, aber auch zur Herstellung von Kraftfahrzeugrahmenteilen eingesetzt.

Überraschenderweise lassen sich durch dieses Innenhochdruckverfahren völlig neuartige hohle Metall-Bauteile, bei denen der Faserverlauf im Bereich der Kreuzung sowie der Wände im wesentlichen parallel zur Außenkontur verläuft, ohne daß Ausknickungen oder andere Schwächungen vorliegen, bilden. Diese hohlen Formteile können demzufolge aufgrund der hohen Wandfestigkeit durch den günstigen Faserverlauf sowie die Verstärkung durch die Innenausschäumung in leichterer Form als bisher ausgebildet werden und ermöglicht dadurch eine erhebliche Gewichtsersparnis. Es ist auch möglich, für die Außenform laminierte Werkstoffe einzusetzen, sofern sich diese gemeinsam umformen lassen. Laminate können durch geeignete Materialauswahl leichter sein als Vollmaterialien und haben noch dazu den Vorteil, vibrationsdämpfend zu wirken oder auch an den Oberflächen entsprechend den Umgebungsbelastungen (Korrosion durch Säuren etc) oder aus ästhetischen Gründen (Farbe) andere Schichten aufzuweisen, sodaß ein derartiges Teil noch dazu günstige Schwingungsdämpfungseigenschaften besitzt, da die Ausschäumung je nach Material elastisch an den Außenwänden anliegt - also die Materialien weniger durch Schwingungen belastet werden.

Es kann auch ein mehrschichtiges Metallrohr als Ausgangsteil, je nach den Anforderungen an das Material, gewählt werden.

Dabei haben mehrschichtige Ausgestaltungen den Vorteil unterschiedlicher Beanspruchbarkeit der Oberflächen des Hohlteils und auch den Vorteil, Schwingungen aller Art schlechter zu leiten, was das Vibrationsverhalten des Hohlteils im Einsatz entscheidend verbessert. Die Innenschicht kann dabei so ausgewählt sein, daß sie unter vorbestimmten Bedingungen, bspw. erhöhte Temperatur, eine Verbindung mit dem Schaummaterial ähnlich einem Lötverfahren oder durch gegenseitige Diffusion eingeht und so die Befestigung des Schaums im hohlen Außenteil bewirkt. Es ist aber auch möglich, einen Metallschaum in einem Kunststoffaußenhohlteil oder in einem mit Kunststoff als Außenschicht aufweisenden Mehrschichtaußenhohlteil vorzusehen, insbesondere dann, wenn die Kunststoffaußenschicht aus Korrosionsgründen oder anderen Gründen, bspw. wegen den Schmiereigenschaften des Kunststoffes od. dgl., erwünscht ist.

Es ist auch möglich, das gesamte Formteil nach Einbringen des Schaums mit einem Umformverfahren umzuformen und so weitere Formen zu erhalten, wobei es bei Einsatz eines IHV-Verfahrens notwendig ist, offenzellige Schäume zu verwenden.

Vorteilhafte Verwendungen des erfindungsgemäßen Teils sind Land- Luft- und Wasserfahrzeuge, Fahrrad-, Motorrad- sowie Autorahmen, Hoch- und Tiefbau, Gerüste, Regalsysteme, Möbel, insbesondere auch als kühlbare Teile, durch deren offenzellige Schäume Kühlfluide geführt werden können.

Insbesondere in allen Anwendungsgebieten des Leichtbaus bietet sich seine Verwendung an.

Dadurch, daß erfindungsgemäß weitestgehend abgeschlossene ausgeschäumte Hohlteile als Bauteile eingesetzt werden, ist es möglich, extrem leichte, aber feste und vibrationsgedämpfte Bauteile oder auch Bauteile kleinerer Abmessungen zu ermöglichen.

Dadurch, daß ein Innenhochdruckumformverfahren eingesetzt wird, ist es möglich, bereits in einem Formvorgang Erhebungen und Vertiefungen u. dgl. am Außenhohlteil herzustellen. Dadurch ist es möglich, Nachbehandlungsschritte zu reduzieren.

Als Hohlteile können dabei unterschiedlichste Hohlprofile nämlich Reckteckprofile, Winkelprofile, Rohre, gewellte Rohre etc. eingesetzt werden.

Es wird somit ein Teil mit einem gegenüber bisherigen Teilen geringerem Gewicht bei gleicher Belastbarkeit oder auch höherer Belastbarkeit bei geringem Gewicht geschaffen, das noch dazu mit hoher Produktionsgenauigkeit bei verminderter Ausschußquote hergestellt werden kann.

Nachfolgend soll die Erfindung näher anhand der beigefügten Zeichnung erläutert werden, in der bevorzugte Ausführungsformen der Erfindung, auf die diese aber keineswegs beschränkt ist, dargestellt sind. Dabei zeigt:
Fig. 1: einen Ausschnitt eines erfindungsgemäßen Bauteils schematisch in perspektivischer Darstellung mit einem geschlossenzelligen Schaum;
Fig. 2: das Bauteil nach Fig. 1 im Längsschnitt;
Fig. 3. das Bauteil nach Fig. 1 im Querschnitt entlang der Linie A-A der Fig. 1;
Figur 4. ein erfindungsgemäßes Bauteil mit offenzelligem Schaum im Querschnitt,
Fig. 5. einen Querschnitt durch ein erfindungsgemäßes Bauteil mit mehrschichtigen Außenwänden; und
Fig. 6 einen Längsschnitt durch einen Abschnitt eines mit verschiedenen Querschnitten ausgebildeten Mehrschicht-Hohlteils mit Schaumfüllung.

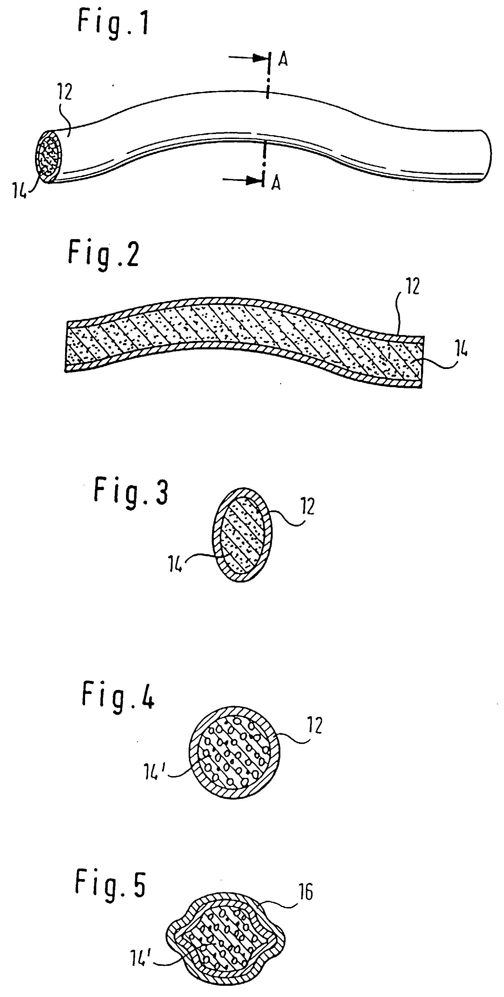

Wie aus Fig. 1, 2 und 3, die jeweils das gleiche Bauteil (Automobilachsträger aus Aluminiumlegierung) zeigen, ersichtlich, besteht das dort dargestellte Bauteil aus einer Außenwand 12 und der Ausschäumung 14 (beides hier aus Aluminiumlegierung). Das Außenformteil wurde mittels des IHV-Verfahrens dreidimensional geformt, um bspw. als Teil einer Raumlenkerachse eingesetzt zu werden.

Es ist zu beachten, daß in die durch das Umformverfahren hergestellten Teile - die Außenwand - Soll-Stauchstellen durch gezielt eingeformte Rillen ausgebildet werden können - bspw. um bei Fahrzeugen im Falle eines Unfalls durch gezielte Verformung Energie aufzunehmen - oder auch Verstärkungsprofile eingearbeitet werden können - bspw. durch das Ausformen von Längsrippen (Fahrgastzelle).

Dabei können die Hohlprofile des Fachwerkes unterschiedliche Durchmesser über ihre Längserstreckung besitzen, sowie unterschiedliche Querschnitte.

In Fig. 4 ist detailliert eine andere Anwendungsform eines erfindungsgemäßen Teils dargestellt. Es handelt sich hierbei um einen Trägerkörper für Kraftfahrzeugkatalysatoren, der einen offenzelligen Stahlschaum in einem Stahlaußengehäuse aufweist. Bei dieser Ausführungsform entfällt die bei diesen Trägerkörpern allgemein bekannte Problematik der Verbindung zwischen Gehäuse und Trägerkörper sowie das Problem der Herstellung von Gaskanälen, die dann mit dem Katalysator beschichtet werden, völlig, da aufgrund der Tatsache, daß nun erstmals das gleiche Material für Gehäuse und Gasdurchlaßkörper (auch häufig als Wabenkörper bezeichnet) verwendet werden kann, Spannungen im Katalysatorträgerkörper, aufgrund der unterschiedlichen Ausdehnungskoeffizienten der für den Trägerkörper verwendeten Materialien, die dessen Lebensdauer bisher einschränkten, vermieden werden können.

In Fig. 5 ist eine weitere Ausführungsform eines erfindungsgemäßen Bauteils mit einem gerippten Rohr dargestellt, wobei die mehrwandige Außenform eine Ausschäumung aufweist.

Dabei können die Hohlprofile sowohl aus einem einzigen Material, bspw. Stahl oder eine Leichtmetallegierung, bestehen, es ist aber je nach Einsatzverfahren auch möglich, Laminatmaterial, auch kunststoffbeschichtete oder überzogene Rohre umzuformen, je nach Anwendungszweck.

Durch das Vorsehen entsprechender Schichten ist es möglich, Korrosionsbeständigkeit oder auch Farbgebung zu erreichen, ohne daß weitere Arbeitsschritte notwendig sind.

Insbesondere kann durch das Ausschäumen mit geschlossenzelligen Schäumen eine hohe Korrosionsfestigkeit erzielt werden, da durch den geschlossenzelligen Schaum kein korrodierendes Material Zutritt erhält.

Wie bekannt, kann Nachführen von Material entlang der Rohrlängsachsen während des Umformens, bspw. durch bewegliche Formelemente, eine im wesentlichen gleichbleibende Wandstärke in der Außenform erzielt werden, so daß Schwächungen der Wandstärke der Außenform durch die Anformung von Erhebungen zumindest teilweise ausgeglichen werden können, so daß eine Anformung von Erhebungen ohne Schwächung erfolgt.

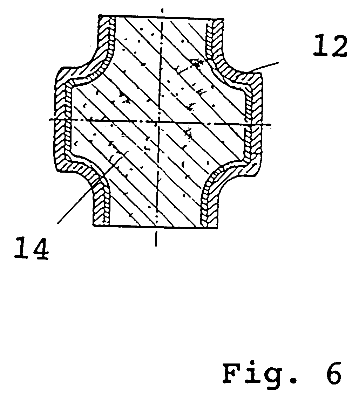

Eine derartige Ausführungsform ist in Fig. 6 dargestellt, wobei ein mehrschichtiges Außenformteil 12, dessen Außenschicht aus Stahl und dessen Innenschicht aus einer Aluminium-Legierung besteht, eine flanschartige Erhebung aufweist, mit einem Aluminiumschaum 14 gefüllt ist. Selbstverständlich kann dieses Formteil der Fig. 6 auch andere Materialkombinationen aufweisen.

Somit wird durch die erfindungsgemäße Ausbildung ein widerstandsfähigeres, leichteres Trägermaterial als bisher möglich, geschaffen.

Weitere Ausgestaltungen und Fortentwicklungen sind im Rahmen des Schutzumfangs der Ansprüche dem Fachmann offensichtlich und der Schutzumfang ist keineswegs auf die hier beispielhaft aufgeführten Ausführungsformen begrenzt, die lediglich zur Erläuterung dienen sollen.

## Patentansprüche

1. Bauteil, insbesondere tragendes Teil für Fachwerke mit ggf. in Form und/oder Größe unterschiedlichen Längs- und/oder Querschnitten mit einem hohlen Außenformteil (12) und einer Metallschaum-Füllung mit einem Metall-Schaumstoff (14) mit hohem Widerstand gegen Verformung, der am Außenformteil zumindest teilweise anliegt, den Innenhohlraum des hohlen Außenformteils (12) mindestens teilweise ausfüllt und die Belastungseigenschaften des Außenformteils (12) sowie die Widerstandsfähigkeit gegen Verformung verbessert.

2. Bauteil nach Anspruch 1, dadurch gekennzeichnet, daß der Faserverlauf des Materials des Außenformteils (12) im wesentlichen parallel zu seinen Außenkonturen verläuft.

3. Bauteil nach Anspruch 1 oder 2, dadurch gekennzeichnet, daß das Außenformteil (12) mehrere parallel zueinander verlaufende, aufeinanderliegende Schichten gleicher oder unterschiedlicher Materialien aufweist, deren Faserverlauf vollständig oder teilweise parallel zueinander ist.

4. Bauteil nach einem der vorangehenden Ansprüche, dadurch gekennzeichnet, daß die Materialien des Außenformteils (12) eine oder mehrere - ggf. gemeinsam umgeformte - Schichten aus kalt- oder warmverformbarem Material aufweisen.

5. Bauteil nach Anspruch 4, dadurch gekennzeichnet, daß das Außenformteil mindestens ein kaltverformbares Material ist, ausgewählt ist aus der Gruppe bestehend aus Metall und Leichtmetall.

6. Bauteil nach Anspruch 5, dadurch gekennzeichnet, daß das kaltverformbare Material ausgewählt ist aus der Gruppe bestehend aus Stahl, Aluminium, Magnesium, Titan und Legierungen derselben.

7. Bauteil nach einem der vorangehenden Ansprüche, dadurch gekennzeichnet, daß es faserverstärkte Werkstoffe im Außenformteil (12) aufweist.
